# EUROPÄISCHE PATENTANMELDUNG

(11) **EP 1 878 940 A2**
(43) Veröffentlichungstag der Anmeldung: **16.01.2008**
(21) Anmeldenummer: 07012695.8
(22) Anmeldetag: 28.06.2007
(51) Int. Cl.: F16F 9/32

(54) **Stoßdämpfer-Einheit und Sensor hierfür**

(30) Priorität: 13.07.2006 DE 202006010887 U
(71) Anmelder: AB Elektronik GmbH, 59368 Werne (DE)
(72) Erfinder: Fallak, Klaus, 59368 Werne (DE)
(74) Vertreter: Wenzel & Kalkoff

(57) **Zusammenfassung**

Bei einer Stoßdämpfereinheit ist eine Kolbenstange (18) mit einem ersten Montagepunkt (12) und ein Zylinder (16) mit einem zweiten Montagepunkt (14) verbunden, wobei eine lineare Relativbewegung der Montagepunkte (12, 14) gedämpft ist. Eine Sensor-Trägereinheit (20) ist mit dem ersten Montagepunkt (12) verbunden, an der ein erstes Sensorelement (26) angeordnet ist. Am zweiten Montagepunkt (14) ist an einem Zylinderelement (16) ein zweites Sensorelement (32) so angebracht, dass es sich mit diesem in axialer Richtung bewegt, aber gegenüber dem Zylinderelement (16) drehbar ist. Das erste Sensorelement (26) weist ein Längsführungselemen (50) auf. Die beiden Sensorelemente (26, 32) bilden einen Sensor für die lineare Relativbewegung. Das zweite Sensorelement (32) weist ein Eingriffselement (52) auf, das mit dem Längsführungselement (50) so zusammenwirkt, daß bei einer Verdrehung des Zylinderelements (16) gegenüber der Sensor-Trägereinheit (20) die radiale Ausrichtung des zweiten Sensorelements (32) zum ersten Sensorelement (26) bestehen bleibt.

## Beschreibung

Die Erfindung betrifft eine Stoßdämpfer-Einheit sowie einen Sensor für eine Stoßdämpfer-Einheit.

In Kraftfahrzeugen werden Stoßdämpfer zusammen mit Federn im Fahrwerkbereich eingesetzt. Die Stoßdämpfer weisen einen ersten Montagepunkt (bspw. für die Karosserie) und einen zweiten Montagepunkt (bspw. für ein Achselement) auf. Eine lineare Relativbewegung der Montagepunkte zueinander, wie sie bspw. beim Einfedern zugehöriger Federungen entsteht, führt zur variablen Aufnahme einer mit einem der Montagepunkte verbundenen Kolbenstange in einem mit dem zweiten Montagepunkt verbundenen Zylinder. Hierbei wird die lineare Relativbewegung durch den Stoßdämpfer hydraulisch gedämpft.

Für eine Vielzahl von Regelungsaufgaben im Betrieb eines Kfz ist es sinnvoll, den jeweils aktuellen Zustand einer Rad- bzw. Achsaufhängung mit Hilfe eines Sensors feststellen zu können. Der entsprechende Sensorwert kann verwendet werden bspw. für eine Scheinwerferregelung oder zur Beeinflussung eines einstellbaren Fahrwerks etc.

In der DE 20 2005 014 342 U1 ist ein linear-induktiver Sensor für eine Scheinwerferregelung in Kraftfahrzeugen dargestellt. Der Sensor weist zwei zueinander bewegbare Teile auf. Ein erstes Sensorteil ist an einem Fahrwerkelement und ein zweites Sensorteil an einem Karosserieelement angeordnet. Es ist angegeben, daß das Fahrwerkelement am Kolben und das Karosserieelement am Zylinder eines Stoßdämpfers angeordnet sein kann. Als Sensor wird ein induktiver Sensor verwendet, bei dem das eine Sensorteil einen Spulenschaltkreis mit mehreren Spulen und das andere Sensorteil einen als induktives Koppelelement arbeitenden Resonanzkreis umfaßt. Der Resonanzkreis ist über ein Resonanzkreis-Halteelement direkt an einem Kolbenelement befestigt, während das Spulenschaltkreis-HaIteelement direkt an einem Zylinderelement des Stoßdämpfers angeordnet ist. Resonanzschaltkreis und Spulenschaltkreis werden von den Elementen gehalten. Bei Veränderung der Höhe zwischen Karosserie und Rad wird der Resonanzschaltkreis über den Spulenschaltkreis in einer linearen Bewegung bewegt und die jeweilige Position ausgewertet. Der so gewonnene Sensorwert wird für eine Leuchtenregelung verwendet, bei der eine Scheinwerferregelungseinheit den Verstellwinkel von Scheinwerfern des Kfz anpaßt.

In der WO 04/005748 ist ein Stoßdämpfer mit einer Anordnung zur Erfassung der Stoßdämpferbewegung beschrieben. Ein Stoßdämpfer ist mit einer Anordnung zur Erfassung der Stoßdämpferbewegung versehen. An einer Kolbenstange ist ein magnetischer Encoder vorgesehen, der einen permanent magnetischen Werkstoff mit entlang der Längsrichtung moduliertem Feldlinien- bzw. Feldstärkeverlauf umfaßt. Ein am Außengehäuse angebrachter Sensorträger enthält einen Magnetfeldsensor, mit dem bei einer Bewegung der Koblbenstange der durch den Encoder gegebene Feldverlauf erfasst wird. Während in einer Ausführung der magnetische Encoder rotationssymmetrisch ist, so dass die Magnetisierung unabhängig von der Orientierung gleichmäßig stark detektierbar ist zeigen weitere Ausführungen nicht rotationssymmetrische Encoder, bei denen eine konstruktive Ausrichtung der Kolbenstange bezüglich des Sensorträgers erforderlich ist.

Es ist Aufgabe der Erfindung, eine Stoßdämpfer-Einheit und einen Sensor hierfür vorzuschlagen, die an die Verhältnisse einer Kfz-Aufhängung besonders gut angepaßt sind.

Diese Aufgabe wird erfindungsgemäß gelöst durch eine Stoßdämpfer-Einheit nach Anspruch 1 und einen Sensor nach Anspruch 16. Abhängige Ansprüche beziehen sich auf vorteilhafte Ausführungsformen der Erfindung.

Die Stoßdämpfer-Einheit umfaßt einen ersten Montagepunkt (üblicherweise zur Anbringung an der Karosserie) und einen zweiten Montagepunkt (üblicherweise zur Anbringung an der Radaufhängung). Diese sind einerseits mit einer Kolbenstange und andererseits mit einem Zylinder verbunden. Eine lineare Relativbewegung der Montagepunkte führt zu einer Verschiebung von Kolben und Zylinder ineinander, die mittels geeigneter Maßnahmen, bspw. hydraulischer Dämpfung, gedämpft ist.

Erfindungsgemäß ist ein Sensor mit einer Sensor-Trägereinheit, einem ersten Sensorelement und einem zweiten Sensorelement vorgesehen. Die Sensor-Trägereinheit dient zur Aufnahme des ersten Sensorelements. Sie ist mit dem ersten Montagepunkt so verbunden, daß sie sich in axialer Richtung des Stoßdämpfers stets mit diesem bewegt.

Ein Zylinderelement ist mit dem zweiten Montagepunkt in gleicher Weise verbunden. Bei diesem Zylinderelement kann es sich um den mit einem Kolben zusammenwirkenden Dämpfungszylinder handeln. Alternativ kommt aber auch ein anderes, zylindrisches, an der Verschiebebewegung beteiligtes Element in Frage, bspw. eine rohrformige Abdeckung, ein äußerer Zylinder etc. Wichtig ist die Übertragung der Relativbewegung, nicht die Funktion des Zylinderelements.

An der Sensor-Trägereinheit ist ein erstes Sensorelement angeordnet, während ein zweites Sensorelement am Zylinderelement angeordnet ist. Zusammen bilden die beiden Sensorelemente einen Sensor für die lineare Relativbewegung der beiden Montagepunkte.

An der Sensor-Trägereinheit ist ein Längsführungselement vorgesehen. Das zweite Sensorelement umfaßt ein Eingriffselement, das mit dem Längsführungselement so zusammenwirkt, daß bei einer Verdrehung des Zylinderelementes gegenüber der Sensor-Trägereinheit die radiale Ausrichtung des zweiten Sensorelements zum ersten Sensorelement bestehen bleibt. Durch diese Konstruktion wird den Verhältnissen einer Fahrzeugfederung Rechnung getragen, bei der es außer der detektierenden Verschiebung der beiden Montagepunkte auch zu einer Verdrehung kommen kann. Um die Funktion dennoch zu gewährleisten ist das zweite Sensorelement am Zylinderelement so angebracht, daß es sich mit diesem in axialer Richtung bewegt, aber dennoch diesem gegenüber drehbar ist. So stellt sich durch die Seitenführung stets die korrekte radiale Ausrichtung der Sensorelemente zueinander ein, so daß eine genaue Erfassung der linearen Relativbewegung gewährleistet bleibt.

Eine entsprechende Seitenführung kann auf verschiedene Weisen erzielt werden. Bevorzugt ist mindestens eine längs ausgerichtet Führungskante. An dieser kann das Eingriffselement in Umfangsrichtung anliegen und ist so gegen eine Verdrehung gesichert. Besonders bevorzugt sind zwei Führungskanten vorgesehen, an denen jeweils ein Eingriffselement vorgesehen ist, so daß eine Verdrehsicherung in beiden Richtungen gegeben ist. Alternativ könnte dies auch dadurch erreicht werden, daß zwei Fuhrungselemente beidseitig an einer Führungskante anliegen.

Gemäß einer Weiterbildung der Erfindung ist vorgesehen, daß das Zylinderelement in der Sensor-Trägereinheit aufgenommen ist, wobei die Aufnahmetiefe der linearen Relativbewegung entspricht. Alternativ wäre es auch möglich, daß umgekehrt die Sensor-Trägereinheit in dem Zylinderelement aufgenommen ist. Diese teleskopische Anordnung ist besonders gut an die Verhältnisse an einem Stoßdämpfer angepaßt.

Gemäß einer Weiterbildung der Erfindung bilden die beiden Sensorelemente einen induktiven Linearsensor. Hierbei umfaßt das erste Sensorelement mindestens eine Sende- und eine Empfangsspule, die entlang des Bewegungsbereiches des zweiten Sensorelementes verlaufen. Das zweite Sensorelement wirkt als induktives Koppelelement und bewirkt eine positionsabhängige induktive Kopplung zwischen der Sende- und der Empfangsspule. Bei Betrieb der Sendespule mit einer Wechselspannung ergibt sich so in der Empfangsspule ein Signal, aus dem die Position des zweiten Sensorelements relativ zum ersten Sensorelement ermittelt werden kann. Besonders bevorzugt lassen sich die Spulen als flache Leiterstrukturen einer ebenen Leiterplatte ausbilden. Dies führt zu einer besonders kostengünstigen Konstruktion. Weiter bevorzugt ist es, als induktives Koppelelement einen Resonanzkreis mit einer Iduktivität und einer Kapazität zu verwenden. Ein entsprechender Sensor ist bspw. in der WO-A-03/038379 beschrieben.

Für die Anbringung des zweiten Sensorelements am Zylinderelement ist bevorzugt vorgesehen, daß sich das zweite Sensorelement zum Teil um das Zylinderelement herum erstreckt, bevorzugt mehr als 180°, besonders bevorzugt vollständig. Das zweite Sensorelement und das Zylinderelement können hierbei so ineinander eingreifen, daß das zweite Sensorelement eine Nut und/oder einen Vorsprung aufweist, während das Zylinderelement eine entsprechend passende Form mit einem Vorsprung und/oder einer Nut aufweist, so daß die beiden miteinander in Eingriff sind. Die entsprechenden Nuten oder Vorsprünge erstrecken sich hierbei mindestens teihingf6rmig in Umfangsrichtung, so daß die gewünschte Verdrehbarkeit erreicht wird.

Gemäß einer Weiterbildung der Erfindung weist das zweite Sensorelement einen Träger auf. Dieser kann bspw. aus Kunststoff bestehen. Zur Verbindung mit dem Zylinderelement kann eine Schnappverbindung vorgesehen sein, wofür der Träger mindestens zum Teil flexibel ausgebildet wird.

Besonders bevorzugt ist es, daß der Träger in Form einer Kappe am Ende des Rohrelements angebracht ist. Die Anbringung am Endes des Rohrelements führt zu einem besonders günstigen großen Meßbereich und entsprechend genauer Erfassung. Die Anbringung in Form einer Kappe ist besonders leicht und exakt herzustellen und zu montieren.

Es ist möglich, ein Kabel zum direkten elektrischen Anschluß an das erste Sensorelement vorzusehen. Bevorzugt weist die Sensor-Trägereinheit allerdings einen Steckkontakt vom elektrischen Anschluß an das erste Sensorelement auf. Bei der Ausbildung eines induktiven Sensors mit einem lediglich passiven induktiven Koppelelement am zweiten Sensorelement entfällt ein elektrischer Anschluß für dieses, so daß sich eine entsprechend einfache Konstruktion ergibt.

Nachfolgend wird eine Ausführungsform der Erfindung anhand der Zeichnungen näher beschrieben. In den Zeichnungen zeigen:
- Fig. 1: eine perspektivische Darstellung eines Stoßdämpfers mit einem Sensor;
- Fig. 2: in perspektivischer Darstellung der Stoßdämpfer aus Fig. 1 im Längsschnitt;
- Fig. 3: in perspektivischer Darstellung der Stoßdämpfer aus Fig. 1 ohne äußeres Gehäuse;

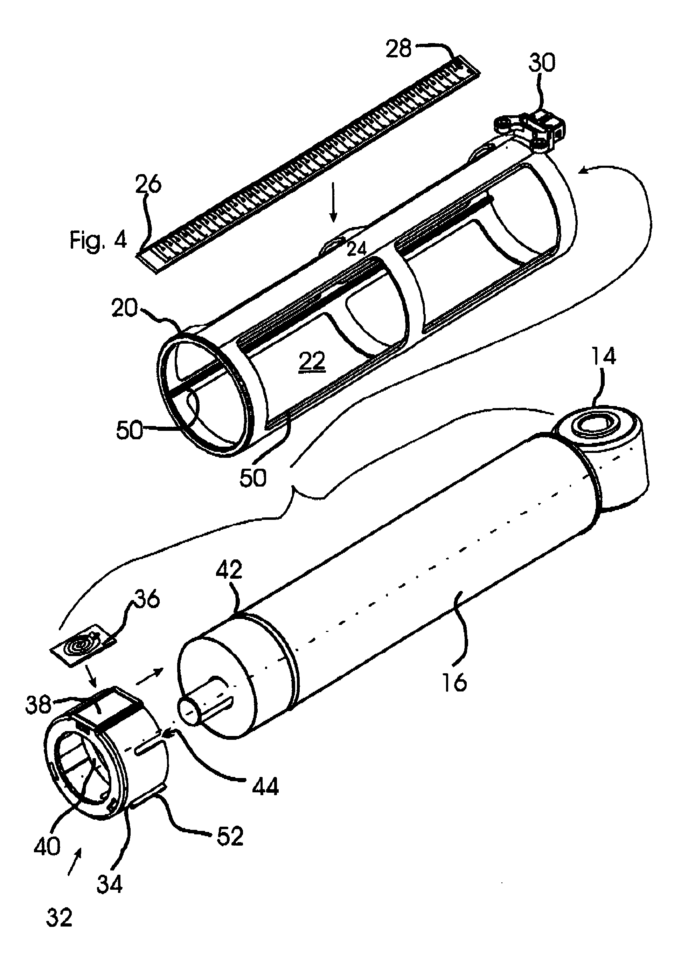

- Fig. 4: in perspektivischer Ansicht eine Exptosionsdarstellung des Stoßdämpfers aus Fig. 3;
- Fig. 5: eine Querschnittdarstellung des Stoßdämpfers aus Fig. 1 mit dem Schnitt an der Linie A..A in Fig. 2.

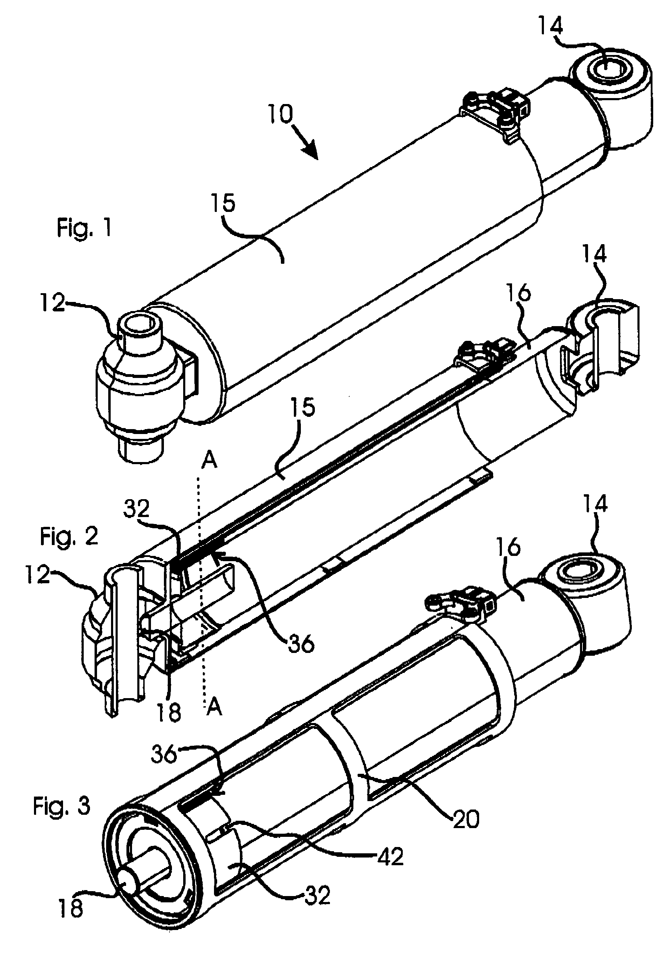

In Fig. 1 ist ein Stoßdämpfer 10 für ein Kfz dargestellt. Zur Anbringung im Bereich der Radaufhängung sind ein erster Montagepunkt 12 und ein zweiter Montagepunkt 14 vorgesehen. Die Montagepunkte 12, 14 werden bei Einbau in einem Kfz einerseits an der Achse oder Radaufhängung und andererseits an der Karosserie angebracht. Zwischen den Montagepunkten 12,14 wirkt üblicherweise zusätzlich ein Federelement (nicht dargestellt). Bei entsprechender Belastung ergibt sich eine Einfederung, die zu einer Verschiebung der Montagepunkte 12, 14 in Längsrichtung führt.

Den inneren Aufbau des Stoßdämpfers 10 zeigen die Schnittdarstellung aus Fig. 2 und die Darstellung aus Fig. 3, bei der eine äußere Hülse 15 entfernt wurde. Es sei hier darauf hingewiesen, daß das eigentliche Innenleben der Funktionselemente des Stoßdämpfers 10, d.h. der Elemente, die eine Dämpfung der linearen Relativbewegung der Montagepunkte 12,14 bewirken, nicht gezeigt ist. Für die vorliegende Erfindung, die sich mit der Erfassung der relativen Position durch einen Sensor befaßt, ist der exakte Aufbau nicht entscheidend. Der eigentliche Stoßdämpfer umfaßt einen mit dem zweiten Montagepunkt 14 starr verbundenen Kolben 16, in dem eine mit dem ersten Montagepunkt 12 verbundene Kolbenstange 18 verschieblich gelagert ist.

Eine Sensor-Trägereinheit 20 ist mit dem ersten Montagepunkt 12 verbunden. Die Sensor-Trägereinheit 20 ist käfigartig mit einem Aufnahmebereich 22 ausgebildet, in dem der Zylinder 16 aufgenommen ist. Je nach Lage der Kolbenstange 18 innerhalb des Zylinders 16 ergibt sich so eine unterschiedlich tiefe Aufnahme des Zylinders 16 innerhalb des Aufnahmebereichs 22 des Sensorträgers 20. In Fig. 1 - 3 ist jeweils die vollständig eingefahrene Stellung dieser beiden Elemente dargestellt.

Der Sensorträger 20 weist eine Montagefläche 24 auf, die sich längs über den gesamten Aufnahmebereich 22 erstreckt. Auf der Montagefläche 24 ist eine Leiterplatte 26 aufgebracht. Bei der Leiterplatte 26 handelt es sich um einen Spulenschaltkreis, auf dem als flache Leiterstruktur (mit Durchkontaktierungen zur Herstellung von Überkreuzungen) über die Länge variierende, räumlich in Quadratar angeordnete Sendespulen und eine als Schleife ausgebildete Empfangsspule vorhanden sind. Weiter ist auf der Leiterplatte 26 eine integrierte Auswerteschaltung (ASIC) 28 vorgesehen, an die die Spulen angeschlossen sind. Die Auswerteschaltung 28 ist mit einem Stecker 30 verbunden, so daß sie elektrisch kontaktiert werden kann. Alternativ kann auch auf den Stecker 30 verzichtet und ein Kabel direkt angeschlossen werden.

Am Kolben 16 ist ein zweites Sensorelement 32 endseitig angebracht. Es umfaßt einen aus Kunststoff hergestellten Sensorhalter 34, der als eine Kappe ausgebildet ist, und eine Leiterplatte 36, auf der mit einer flachen Spulenstruktur und einem Kondensator ein Resonanzkreis gebildet ist. Der Resonanzkreis 36 ist auf einer Montagefläche 38 des Halters 34 aufgebracht. Der Halter 34 weist eine innere, ringförmig umlaufende Nut 40 auf, in die bei Anbringung am Kolben 16 eine dortige Wulst 42 eingreift. Der Halter 34 weist am Umfang verteilte Einschnitte 44 auf, so daß er sich beim Aufsetzen auf das Ende des Kolbens 16 flexibel weiten kann und die ringförmige Nut 40 um die ringförmige Wulst 42 einschnappt. So ist der Halter 34 in einer Weise am Kolben 16 befestigt, daß er sich bei dessen Bewegung in axialer Richtung stets (durch die passenden Abmessungen von Wulst 42 und Nut 40 weitgehend spielfrei) mit diesem bewegt. Gleichzeitig ist aber eine Verdrehung des Halters 34 gegenüber dem Kolben 16 möglich.

Im zusammengebauten Zustand liegt die Leiterplatte 36 mit dem darauf gebildeten Resonanzkreis direkt unterhalb des Spulenschaltkreises 26. Hierdurch ist ein Sensor gebildet, wie er bspw. in der WO-A-03/038379 A1 beschrieben ist. Die Sendespulen des Spulenschaltkreises werden mit speziellen zeitlichen Spannungsverläufen erregt, so daß sich ein zeitlich und räumlich veränderliches Feld ergibt. Die am Ort der Leiterplatte 36 wirkenden Feldanteile erregen den Resonator. Ein von diesem zurückgesendetes Signal wird von der Empfängerspule empfangen. Die Erzeugung der Signalverläufe für die Sendespulen erfolgt ebenso wie die Auswertung des von der Empfangsspule empfangenen Signals in der integrierten Schaltung 28. Hier wird aus den Phaseninformationen des Ausgangssignals ein Wert für die Stellung des zweiten Sensorelements 32 ermittelt. Dieser kann als analoges oder digitales Signal am Steckeranschluß 30 ausgegeben werden.

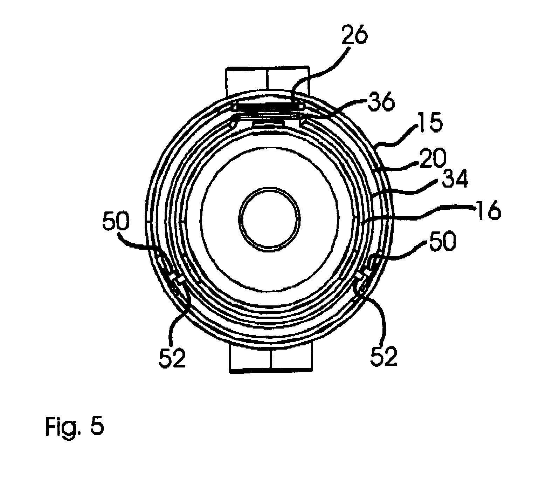

Damit die Ausrichtung der beiden Sensorteile, Spulenschaltkreis 26 und Resonanzkreis 36, zueinander stets gewährleistet bleibt, ist eine Seitenführung vorgesehen. Hierfür weist der Sensorträger 20 zwei gerade, in Längsrichtung angeordnete Stege 50 auf. Diese Stege 50 stehen über die gesamte Länge des Sensorträgers 20 in Richtung des zweiten Sensorelements 32 frei hervor. Dieses weist Vorsprünge 52 auf, die im zusammengebauten Zustand in wie in Fig. 5 gezeigt, seitlich an den Kanten 50 anliegen. Durch die beidseitige Anlage ist eine Verdrehsicherung in beiden Drehrichtungen gegeben.

Wird der Stoßdämpfer 10 im Fahrwerkbereich eines Kfz eingebaut, bspw. als Teil eines McPherson-Federbeins, so ergibt sich im Betrieb des Kfz je nach Lastzustand eine unterschiedlich starke Einfederung, und damit ein unterschiedlich starkes Eindringen der Kolbenstange 18 in den Zylinder 16. Entsprechend nimmt das zweite Sensorelement 32 gegenüber dem ersten Sensorelement 26 unterschiedliche Stellungen innerhalb seines sich über die Länge des Sensorträgers 20 erstreckenden Bewegungsbereiches ein. Hierbei bleibt das induktive Koppelelement 36 stets wie in Fig. 5 gezeigt knapp unterhalb der Leiterplatte 26 parallel zu dieser ausgerichtet. Daher kann die Relativposition des zweiten Sensorelements 32 zum ersten Sensorelement 26 in der Auswerteschaltung 28 sehr genau ermittelt und am Stecker 30 ausgegeben werden.

Zu der gezeigten Ausführung sind verschiedene Ergänzungen und Alternativen denkbar. Während im gezeigten Beispiel das zweite Sensorelement 32 direkt am Dämpfungskolben 16 angebracht ist, kann es alternativ auch an einem anderen, rohrförmigen, an der Verschiebebewegung beteiligten Element befestigt sein. Bspw. ist es möglich, daß das zweite Sensorelement 32 nicht teleskopisch innerhalb des Sensorträgers 20, sondern vielmehr außen um diesen herum angeordnet ist.

## Patentansprüche

1. Stoßdämpfer-Einheit mit
- einem ersten Montagepunkt (12) und einem zweiten Montagepunkt (14), wobei eine mit einem der Montagepunkte verbundene Kolbenstange so in einem mit dem anderen Montagepunkt verbundenen Zylinder (16) aufgenommen ist, daß eine lineare Relativbewegung der Montagepunkte (12,14) gedämpft ist,
- wobei eine Sensor-Trägereinheit (20) mit dem ersten Montagepunkt (12) verbunden ist, an der ein erstes Sensorelement (26) angeordnet ist, und wobei an der Sensor-Trägereinheit (20) mindestens ein Längsführungselement (50) vorgesehen ist,
- und wobei ein Zylinderelement (16) mit dem zweiten Montagepunkt (14) verbunden ist, wobei an dem Zylinderelement ein zweites Sensorelement (32) so angebracht ist, daß es sich mit diesem in axialer Richtung bewegt, aber gegenüber dem Zylinderelement (16) drehbar ist,
- wobei die beiden Sensorelemente (26, 32) einen Sensor für die lineare Relativbewegung bilden,
- und wobei das zweite Sensorelement (32) mindestens ein Eingriffselement (52) aufweist, das mit dem Längsftihrungselement (50) so zusammenwirkt, daß bei einer Verdrehung des Zylinderelements (16) gegenüber der Sensor-Trägereinheit (20) die radiale Ausrichtung des zweiten Sensorelements (32) zum ersten Sensorelement (26) bestehen bleibt.

2. Einheit nach Anspruch 1, bei der
- das Zylinderelement (16) in der Sensor-Trägereinheit (20) aufgenommen ist, wobei die Aufnahmetiefe der linearen Relativbewegung entspricht.

3. Einheit nach einem der vorangehenden Ansprüche, bei der
- das erste Sensorelement (26) mindestens eine Sende- und eine Empfangsspule aufweist, die entlang eines Bewegungsbereiches des zweiten Sensorelements verlaufen,
- und das zweite Sensorelement (32) ein induktives Koppelelement (36) umfaßt,
- so daß eine induktive Kopplung zwischen der Sendespule und der Empfangsspule von der Position des zweiten Sensorelements (32) relativ zum ersten Sensorelement (26) abhängt.

4. Einheit nach Anspruch 3, bei der
- das erste Sensorelement eine ebene Leiterplatte (26) mit darauf als flachen Leiterstrukturen ausgebildeter Sende- und Empfangsspule umfaßt.

5. Einheit nach Anspruch 4, bei der
- das zweite Sensorelement (32) eine ebene Leiterstruktur (36) umfaßt, die parallel im Abstand zur Leiterplatte (26) des ersten Sensorelements angeordnet ist.

6. Einheit nach einem der Ansprüche 3 - 5, bei der
- das zweite Sensorelement (32) einen Resonanzkreis (36) mit mindestens einer Induktivität und einer Kapazität aufweist.

7. Einheit nach einem der vorangehenden Ansprüche, bei der
- als Längsführungselement mindestens eine sich längs erstreckende Anlagekante (50) an der Sensor-Trägereinheit (20) vorgesehen ist,
- und am zweiten Sensorelement (32) mindestens ein Eingriffselement (52) als Vorsprung zur Anlage an der Anlagekante (50) vorgesehen ist.

8. Einheit nach Anspruch 7, bei der
- mindestens eine Anlagekante (50) und mindestens zwei Eingriffselemente (52),
- oder mindestens zwei Anlagekanten (50) und mindestens ein Eingriffselement (52) vorgesehen sind.

9. Einheit nach einem der vorangehenden Ansprüche, bei der
- sich das zweite Sensorelement (32) mindestens zum Teil um das Zylinderelement (16) herum erstreckt.

10. Einheit nach Anspruch 9, bei der
- das zweite Sensorelement (32) mindestens eine Nut (40) und/oder einen Vorsprung aufweist,
- und das Zylinderelement (16) mindestens eine Nut und/oder einen Vorsprung (42) aufweist,
- wobei die Nut (40) und/oder der Vorsprung am zweiten Sensorelement mit der Nut und/oder dem Vorsprung (42) am Zylinderelement miteinander in Eingriff sind,
- und sich mindestens eine Nut (40) und/oder ein Vorsprung (42) mindestens teilringförmig in Umfangsrichtung erstreckt.

11. Einheit nach einem der vorangehenden Ansprüche, bei der
- das zweite Sensorelement (32) einen Träger (34) aufweist.

12. Einheit nach Anspruch 11, bei der
- der Träger (34) aus Kunststoff besteht.

13. Einheit nach Anspruch 11 oder 12, bei der
- der Träger (34) mindestens zum Teil flexibel ist und am Rohrelement (16) in einer Schnappverbindung aufgenommen ist.

14. Einheit nach einem der Ansprüche 11 - 13, bei der
- der Träger (34) in Form einer Kappe am Ende des Rohrelements (16) angebracht ist.

15. Einheit nach einem der vorangehenden Ansprüche, bei der
- an der Sensor-Trägereinheit (20) ein Steckkontakt (30) zum elektrischen Anschluß an das erste Sensorelement (26) vorgesehen ist,

16. Sensor für eine Stoßdämpfer-Einheit mit
- einer Sensor-Trägereinheit (20) mit einem Aufnahmebereich (22) für die in Längsrichtung variable Aufnahme eines Zylinderelements,
- wobei an der Sensor-Trägereinheit (20) ein erstes Sensorelement (26) angeordnet ist,
- und mit einem zweiten Sensorelement (32), das mit dem ersten Sensorelement (26) einen Sensor für eine lineare Relativbewegung bildet,
- wobei an der Sensor-Trägereinheit (20) mindestens ein Längsführungselement (50) und am zweiten Sensorelement mindestens ein Eingriffselement (52) vorgesehen sind,
- und wobei das zweite Sensorelement (32) hierdurch bei der linearen Verschiebebewegung innerhalb des Aufnahmebereichs (22) so geführt wird, daß die radiale Ausrichtung des zweiten Sensorelements (32) zum ersten Sensorelement 26 bestehen bleibt.
